# DEMANDE DE BREVET EUROPEEN

(11) **EP 1 217 670 A1**
(43) Date de publication de la demande: **26.06.2002**
(21) Numéro de dépôt: 00204723.1
(22) Date de dépôt: 21.12.2000
(51) Int. Cl.: H01M 2/12

(54) **Event de sécurité pour stockage prolongé d'une batterie**

(71) Demandeur: Renata AG, 4452 Itingen (CH)
(72) Inventeur: Exnar, Ivan, 4452 Itingen (CH)
(74) Mandataire: Thérond, Gérard Raymond

(57) **Abrégé**

La batterie comprend un container métallique contenant des matériaux actifs, formant respectivement l'anode et la cathode, et un électrolyte, ledit container étant obturé à sa partie supérieure par un capot hermétiquement scellé et séparé des matériaux actifs par un élément isolant, ledit capot étant pourvu de deux bornes de contact reliées électriquement à l'anode et à la cathode par des moyens de connexion, et d'un passage traversant formé par un tube disposé à proximité ou confondu avec la borne négative, ledit passage traversant, reliant l'intérieur et l'extérieur de la batterie, obturé vers l'extérieur par une composition métallique thermofusible. L'évent est caractérisé en ce que ledit passage traversant est en outre obturé vers l'intérieur par une composition organique inerte vis à vis de l'électrolyte et ayant un point de fusion inférieur ou égal à celui de la composition métallique thermofusible.

## Description

La présente invention a pour objet un évent de sécurité pour une pile ou un accumulateur, désigné par la suite par le terme générique de "batterie", qui permet d'augmenter la durée de stockage avant emploi sans risque de détérioration dudit évent. L'invention concerne notamment une telle batterie de type lithium-ion dans laquelle l'évent de sécurité est formé par une composition thermofusible sensible à une élévation anormale de température.

Durant les dernières décennies les batteries de type lithium-ion, qu'elles soient de forme bâton, bouton ou prismatique, ont connu un grand développement car elles présentent l'avantage de posséder une grande densité d'énergie, qualité particulièrement utile pour les appareils électroniques portables tels que les téléphones mobiles, les ordinateurs portables, ou les caméras vidéo.

En contrepartie de cette qualité de telles batteries comportent des risques si on ne respecte pas certaines conditions d'emploi ou si on n'équipe pas lesdites batteries de dispositifs permettant de maintenir notamment la tension et la température dans une "fenêtre" de sécurité. En effet, lorsque la batterie est en circuit fermé avec une forte demande de courant, lors de la phase de charge pour un accumulateur, ou lors d'un dysfonctionnement du à un mauvais usage, les réactions chimiques qui se produisent peuvent provoquer une décomposition partielle de l'électrolyte en entraînant une augmentation de la pression interne et une élévation de la température pouvant aller jusqu'à l'explosion, voire l'inflammation de ladite batterie.

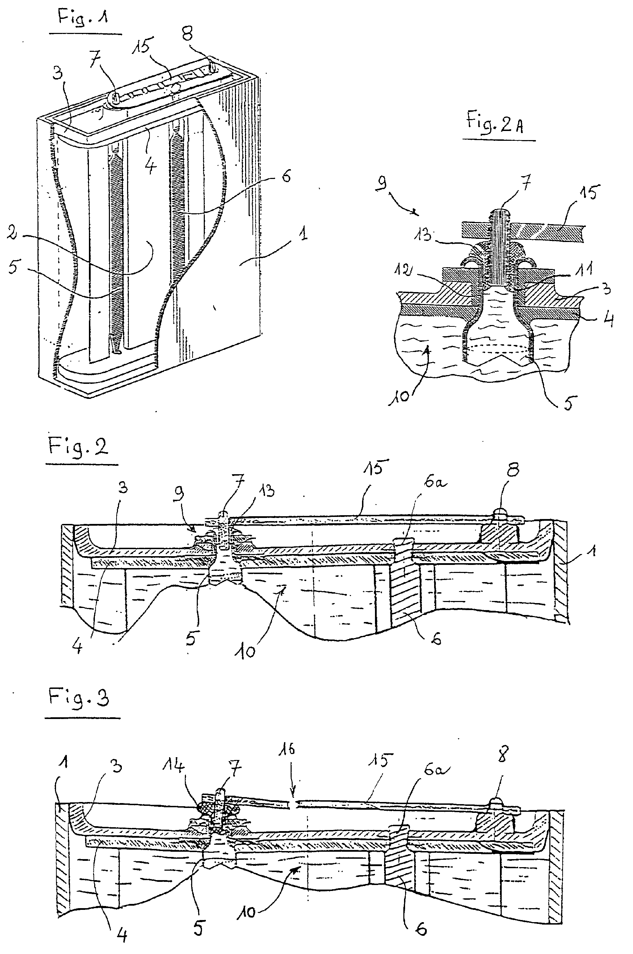

En ce qui concerne la tension, la fenêtre de sécurité se situe entre 3 et 4,2 V. Le dispositif le plus courant pour maintenir la tension dans cette fenêtre, ou plus exactement pour mettre la batterie hors circuit si la tension se situe en dehors de la fenêtre, consiste à souder entre les bornes un petit circuit électronique, comme représenté sur la figure 1.

En ce qui concerne la température, la fenêtre de sécurité correspond à une température critique inférieure à 160°C pour les batteries de type lithium-ion. Pour maintenir la température en dessous d'une valeur critique de nombreux dispositifs ont été proposés pour la dissipation de la chaleur, par exemple en facilitant la circulation de fluides de refroidissement, comme indiqué par exemple dans les demandes de brevet EP 0 596 778 et EP 0 613 204, ou en prévoyant des ailettes à la façon d'un radiateur, comme indiqué par exemple dans la demande de brevet EP 0 403 569. Dans le cas où les dispositifs de dissipation de la chaleur se révéleraient insuffisants, il est également possible de prévoir un évent de sécurité permettant de mettre l'intérieur de la batterie en communication avec le milieu extérieur. Un tel évent est formé par un orifice ou un conduit qui relie l'intérieur et l'extérieur de la batterie et qui est obturé par un bouchon d'une composition thermofusible ayant un point de fusion inférieur à la température critique. La composition thermofusible est de préférence formée par une composition de métaux choisis parmi l'étain, le bismuth, le plomb, le cadmium, l'argent, le gallium et l'indium et dont le point de fusion est compris entre 90°C et 150°C. Ces bouchons d'une composition thermofusible peuvent être disposés à un endroit quelconque du container de la batterie, par exemple à travers le couvercle. Dans les modes de réalisation décrits dans la demande de brevet EP 0 948 065, la composition thermofusible est disposée dans un jeu formé entre un tube traversant le couvercle et une tige constituant une borne comme représenté à la figure 1 et en coupe agrandie à la figure 2.

Dans tous les cas, selon l'art antérieur précité, la composition thermofusible est toujours en contact avec l'électrolyte, y compris en période de stockage. L'évent de sécurité ne peut alors pas être sollicité par le fonctionnement ou le dysfonctionnement de la batterie. Par contre, au niveau de l'électrode négative, l'électrolyte peut réagir avec les métaux présents dans la composition thermofusible. C'est en particulier le cas lorsque l'électrolyte contient l'ion lithium très réactif, par exemple le triflate ou l'hexafluorophosphate de lithium, et lorsque la composition thermofusible contient par exemple de l'étain. Il se forme alors un composé intermétallique LiSnₓ dont le volume massique peut atteindre jusqu'à environ 300% le volume initial, comme cela ressort de la publication de M. Winter et al. ("Insertion electrode materials for rechargeable lithium batteries", Adv. Mater. 1998, 10, No 10).

Même si ce phénomène ne conduit pas à l'expulsion du bouchon thermofusible, cela présente comme inconvénient majeur de compromettre l'étanchéité de la batterie et peut également entraîner une modification des cotes de la batterie pouvant empêcher son insertion dans un logement prévu aux cotes initiales, voire provoquer une rupture d'un circuit électronique interposé entre les bornes. La figure 2 représente schématiquement l'état d'un évent de cet art antérieur au début de stockage et la figure 3 après un certain temps de stockage.

La présente invention vise à pallier les inconvénients susmentionnés en procurant une batterie pouvant avoir avant utilisation une période de stockage plus longue que celle des batteries de l'art antérieur, sans risque de détérioration de l'évent.

A cet effet, l'invention a pour objet un évent de sécurité disposé au pole négatif d'une batterie ayant un container métallique contenant des matériaux actifs, formant respectivement l'anode et la cathode, imprégnés d'un électrolyte. Le container est obturé à sa partie supérieure par un capot hermétiquement scellé et séparé des matériaux actifs par un élément isolant. Le capot est pourvu de deux bornes de contact reliées électriquement à l'anode et à la cathode par des moyens de connexion et d'un passage traversant, reliant l'intérieur et l'extérieur de la batterie, obturé vers l'extérieur par une composition métallique thermofusible. L'évent selon l'invention est caractérisé en ce que ledit passage traversant est obturé vers l'intérieur par une composition organique inerte vis à vis de l'électrolyte et ayant un point de fusion inférieur ou égal à celui de la composition métallique thermofusible.

Le passage traversant est formé de préférence par une douille ou un tube permettant de bloquer ensemble le capot et l'élément isolant.

L'évent de sécurité peut être réalisé selon l'un des modes décrits dans la demande de brevet EP 0 948 065, comme cela sera expliqué plus en détail dans les exemples qui suivent.

D'autres caractéristiques et avantages de la présente invention apparaîtront dans la description suivante d'une batterie prismatique, prise à titre d'exemple illustratif et non limitatif, en référence aux dessins annexés dans lesquels :
- la figure 1 est une représentation en perspective partiellement arrachée d'une batterie selon l'art antérieur;
- la figure 2 est une coupe selon le grand plan de symétrie de la partie supérieure de la batterie représentée à la figure 1, en début de stockage;
- la figure 2A est une représentation agrandie de l'évent de la figure 2;
- la figure 3 correspond à la figure 2 et représente les détériorations provoquées par un stockage prolongé, et
- la figure 4 représente selon la même coupe que celle des figures 2 et 3 un mode de réalisation d'un évent de sécurité selon l'invention.

Dans la description qui suit un évent de sécurité selon l'invention est adapté à une batterie lithium-ion prismatique à enroulement bobiné, du type de celle décrite dans la demande de brevet EP 0 948 072 au nom de la demanderesse et incorporée dans la présente demande par référence.

Une batterie, selon le document EP 0 948 072, représentée en perspective partiellement arrachée à la figure 1, comprend un container métallique 1, destiné à être hermétiquement fermé par un capot 3, soudé sur son pourtour. Le container 1 contient une bobine 2 en un matériau isolant, formé par un plateau inférieur et un plateau supérieur formant un élément isolant 4. Un isthme réunit les deux plateaux et comporte près de ses bords des évidements dans lesquels sont placés des moyens de connexion 5, 6 reliés électriquement à des bornes de contact 7, 8. Ces moyens de connexion 5, 6 sont les points d'ancrage d'une bande composite (non représentée) contenant les matériaux de l'anode et de la cathode, enroulée sur la bobine 2. Cet enroulement est imprégné d'un électrolyte 10 occupant toute la cavité du container 2, comme représenté dans la coupe de la figure 2, effectuée selon un plan médian parallèle à une grande surface de la batterie. Dans cet exemple l'électrolyte utilisé contient un sel de lithium, tel que le triflate ou l'hexafluorophosphate de lithium. Dans ce mode de réalisation le moyen de connexion 6 est soudé en 6a dans le capot qui fait la jonction électrique avec la borne positive 8 déportée près de l'extrémité du capot 3 pour permettre la mise en place d'un circuit électronique 15 rejoignant la borne négative 7. La borne 7 est équipée d'un évent de sécurité 9, représenté à plus grande échelle à la figure 2A, du type de ceux décrits dans la demande de brevet EP 0 948 065 déjà citée. Cet évent 9 comporte fondamentalement un tube 11, dont le prolongement à l'intérieur du container 1 est aplati pour former le moyen de connexion 5, ledit tube permettant de pincer l'élément isolant 4 et le couvercle 3 en étant électriquement isolé de celui-ci au moyen d'un manchon isolant 12 à collerette. Le tube 11 est obturé vers l'extérieur par une composition métallique thermofusible 13 traversée par une petite portion de tige formant la borne négative 7, ladite composition 13 étant en contact avec l'électrolyte 10. Dans cet exemple, on a utilisé comme composition thermofusible 13 un alliage d'étain de bismuth et de plomb (35,7/35,7/28,6) ayant pour point de fusion 102°C, disponible chez Alpha-Fry Technologies Nürenberg (Allemagne).

En situation "normale" en début de stockage représentée à la figure 2, la composition métallique thermofusible 13 obture parfaitement l'évent et on voit que le circuit électronique de protection 15 est sensiblement parallèle au capot.

A bout d'un certain temps de stockage les ions lithium ont réagi avec l'étain pour former un composé intermétallique LiSnₓ pouvant augmenter jusqu'à 300% le volume massique de la composition thermofusible. Cette augmentation de volume s'accompagne d'une fragilisation mécanique de l'évent pouvant provoquer une diminution de l'étanchéité et produire, comme représenté à la figure 3 une expansion 14 vers l'extérieur, en entraînant la tige de contact 7, ce qui peut conduire à une rupture 16 du circuit électronique 15. L'expansion 14 peut continuer à obturer plus ou moins bien l'évent, mais s'étendre au delà de l'extrémité des contacts, et par là-même rendre une batterie en état de fonctionnement inutilisable simplement parce qu'elle ne pourra plus être insérée dans le logement prévu à cet effet dans un appareil portable électronique.

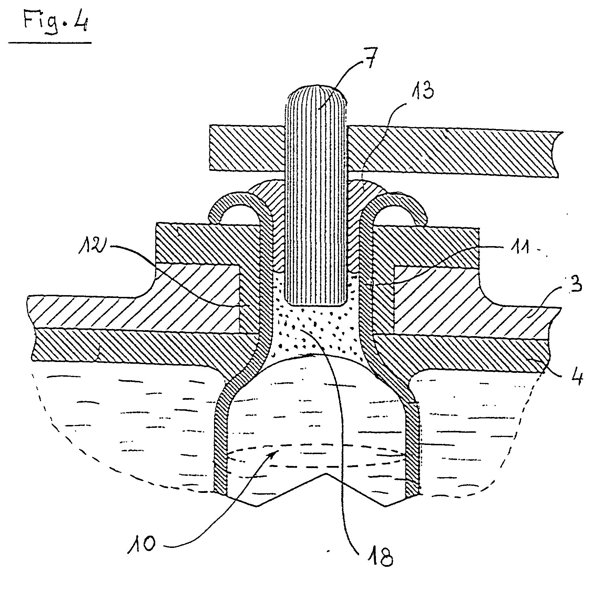

En se référant maintenant à la figure 4, on a représenté, un évent de sécurité 19 selon l'invention adaptable à tout type de batterie dans laquelle il existe un risque de réaction parasite entre l'électrolyte 10 et une composition thermofusible 13 de l'évent. Cela est par exemple le cas, comme indiqué précédemment, lorsque l'électrolyte contient des ions lithium et lorsque la composition thermofusible est par exemple à base d'étain. Cet évent, formé à proximité ou confondu avec la borne négative 7, a la même structure générale que celle qui a été décrite en référence à la figure 2A. Il en diffère toutefois fondamentalement en ce que l'ouverture intérieure de la douille 11 est obturée par une composition organique 18, inerte vis à vis de l'électrolyte 10 et ayant un point de fusion inférieur ou égal à celui de la composition métallique thermofusible 13. Cette composition organique est par exemple une cire de type paraffine, disponible notamment sous la référence Microwax HW9822 chez Paramelt Heerhugowaardn (Pays-Bas). En période de stockage dans des conditions normales de température la composition organique 18 va empêcher toute réaction parasite entre l'électrolyte 10 et la composition métallique thermofusible 13. Lorsque la batterie est en service et que, pour une raison quelconque, sa température interne va au delà de fenêtre de sécurité, la composition organique, puis la composition métallique vont fondre et libérer le passage de l'évent.

D'autres modes de réalisations peuvent être envisagés par l'homme de l'art sans sortir du cadre de la présente invention.

## Revendications

1. Event de sécurité pour une batterie ayant un container métallique contenant des matériaux actifs, formant respectivement l'anode et la cathode, et un électrolyte, ledit container étant obturé à sa partie supérieure par un capot hermétiquement scellé et séparé des matériaux actifs par un élément isolant, ledit capot étant pourvu de deux bornes de contact reliées électriquement à l'anode et à la cathode par des moyens de connexion, et d'un passage traversant formé par un tube disposé à proximité ou confondu avec la borne négative, ledit passage traversant, reliant l'intérieur et l'extérieur de la batterie, en étant obturé vers l'extérieur par une composition métallique thermofusible, **caractérisé en ce que** ledit passage traversant est en outre obturé vers l'intérieur par une composition organique inerte vis à vis de l'électrolyte et ayant un point de fusion inférieur ou égal à celui de la composition métallique thermofusible.

2. Event de sécurité selon la revendication 1, **caractérisé en ce que** le passage traversant est formé par un tube serti à l'extérieur par recourbement de ses bords sur le capot, présentant à l'intérieur un plus grand diamètre, formant un épaulement en appui sur l'élément isolant et s'étendant à l'intérieur du container pour former un moyen de connexion.

3. Event de sécurité selon la revendication 1, **caractérisé en ce que** la composition métallique thermofusible est traversée par une tige formant une borne de la batterie.

4. Event de sécurité selon la revendication 3, **caractérisé en ce que** l'extrémité de la tige formant une borne est reliée à l'autre borne par un circuit électronique.

5. Event de sécurité selon la revendication 1, **caractérisé en ce que** l'électrolyte est un sel de lithium et **en ce que** la composition métallique thermofusible contient de l'étain et au moins un autre métal choisi parmi le bismuth, le plomb, le cadmium, l'argent, le gallium et l'indium.

6. Event de sécurité selon la revendication 6, **caractérisé en ce que** la composition métallique thermofusible a un point de fusion inférieur à 160°C.

7. Event de sécurité selon la revendication 1, **caractérisé en ce que** la composition organique est une cire de type paraffine.
